# FASCICULE DE BREVET EUROPEEN

(11) **EP 3 548 730 B1**
(45) Date de publication et mention de la délivrance du brevet: **12.08.2020**
(21) Numéro de dépôt: 17812023.4
(22) Date de dépôt: 24.11.2017
(51) Int. Cl.: F02K 9/44, B64G 1/40

(54) **SYSTÈME CORRECTEUR D'EFFET POGO**
POGO-EFFEKT-KORREKTURSYSTEM
POGO EFFECT CORRECTION SYSTEM

(30) Priorité: 02.12.2016 FR 1601711
(43) Date de publication de la demande: 09.10.2019
(73) Titulaire: ArianeGroup SAS, 75015 Paris (FR)
(72) Inventeur: CINGAL, Benoit, Mathieu, André, 27200 Vernon (FR); LLANOS GARCIA, Jesus, 47003 Valladolid (ES)
(74) Mandataire: Cabinet Beau de Loménie
(86) Numéro de dépôt international: PCT/FR2017/053248
(87) Numéro de publication internationale: WO 2018/100274

(56) Documents cités:
- WO-A1-2016/120571
- FR-A1- 2 975 440

## Description

### DOMAINE DE L'INVENTION

Le présent exposé concerne un système correcteur d'effet POGO pour un système d'alimentation en propergol liquide d'un moteur-fusée.

Un tel système correcteur d'effet POGO peut être utilisé pour tout type de propergol liquide et pour tout type de moteur-fusée, civil ou militaire.

### ETAT DE LA TECHNIQUE ANTERIEURE

Dans le domaine des fusées à propergols liquides, on a donné le nom d'effet POGO à l'entrée en résonance d'un propergol liquide dans le circuit d'alimentation du moteur-fusée avec des oscillations mécaniques de la fusée. Comme la poussée du moteur-fusée varie avec le débit de propergol fourni par le circuit d'alimentation, une telle entrée en résonance peut causer des oscillations rapidement divergentes, et donc donner lieu à des difficultés de guidage, et même à des dommages pouvant aller jusqu'à la perte totale de la charge utile, voire du véhicule. Le nom d'effet POGO ne provient pas d'un acronyme, mais des « pogo sticks » ou échasses sauteuses, jouets formés par une tige à ressort dont les bonds ont rappelé aux techniciens les oscillations longitudinales violentes des fusées provoquées par cet effet. Depuis le début du développement des fusées à propergols liquides, il s'est donc révélé très important de prévoir des systèmes correcteurs d'effet POGO. Par « système correcteur d'effet POGO », on entend tout système apte à supprimer totalement les oscillations POGO ou à les limiter à une intensité suffisamment faible pour ne pas causer de difficultés de guidage ou de dommages du véhicule.

Parmi les systèmes correcteurs d'effet POGO, on connaît notamment les systèmes de type capacitif, divulgués par exemple dans le brevet français n° 2 975 440. Dans un tel système, le réservoir d'un accumulateur hydraulique est disposé autour de la conduite d'une ligne d'alimentation en propergol liquide du moteur-fusée (par exemple, la ligne d'alimentation en oxygène liquide (LOx)), et communique avec cette conduite d'alimentation via des orifices de communication pratiqués dans sa partie inférieure. Un débit constant de gaz (par exemple de l'hélium (He)) est injecté dans la partie supérieure du réservoir, de manière à entretenir une bulle de gaz dans le réservoir, et un tube plongeur de rejet relie l'interface liquide-gaz à la conduite d'alimentation en propergol liquide, une dépression étant entretenue en sortie du tube de rejet afin d'assurer l'aspiration du gaz en excès à l'interface liquide-gaz. Le document WO 2016/120571 illustre un autre système correcteur du même type.

Dans les architectures de système correcteur capacitif connues, cette dépression est générée d'une part par la différence de niveau entre les deux extrémités du tube de rejet, entraînant une dépression hydrostatique, et d'autre part par une portion de tube percée d'orifices faisant saillie dans la conduite d'alimentation en propergol, la forte vitesse du propergol contournant cette portion de tube en saillie entraînant une dépression hydrodynamique au niveau des orifices du tube de rejet.

Toutefois, certaines configurations de moteur-fusée rendent difficile, ou inefficace, la mise en place d'un tel système de rejet. En particulier, le système d'alimentation de certains moteurs-fusée possède une conduite coudée : dans un tel cas, les lignes de courant sont perturbées dans la conduite, rendant instable voire inexistante la dépression hydrodynamique au niveau du tube de rejet. De plus, une telle géométrie coudée impose généralement de raccourcir le tube de rejet, réduisant dès lors également la composante hydrostatique de la dépression.

Par ailleurs, certains moteurs-fusée sont prévus pour fonctionner en micro-gravité, annulant la dépression hydrostatique du tube de rejet, ou à régime variable, réduisant fortement sa dépression hydrodynamique dans les phases à faible régime lorsque la vitesse du propergol est réduite dans la conduite.

En outre, il est préféré de nos jours de fabriquer de tels systèmes par fabrication additive, or une telle portion de tube faisant saillie dans la conduite est difficile à réaliser avec de telles techniques de fabrication additive.

Dès lors, afin de résoudre les problèmes posés par un tel tube de rejet, il a été proposé de supprimer ce tube et de le remplacer par un drain rejetant l'excès de gaz dans le vide à l'extérieur du véhicule. Toutefois, cette solution n'est pas pleinement satisfaisante car elle est responsable d'une surconsommation de propergol, le drain rejetant périodiquement du propergol hors du véhicule lorsque le volume de la bulle de gaz diminue, lors de phases de montée en pression dans la conduite d'alimentation par exemple.

Il existe donc un réel besoin pour un système correcteur d'effet POGO pour un système d'alimentation en propergol liquide d'un moteur-fusée qui soit dépourvu, au moins en partie, des inconvénients inhérents aux configurations connues précitées.

### PRESENTATION DE L'INVENTION

Le présent exposé concerne un système correcteur d'effet POGO pour un système d'alimentation en propergol liquide d'un moteur-fusée, comprenant une partie de conduite d'alimentation en propergol liquide, un accumulateur hydraulique, comprenant un réservoir équipé d'une alimentation en gaz et relié, d'une part, à la partie de conduite d'alimentation par au moins un passage de prélèvement débouchant au niveau d'un tronçon de prélèvement de la partie de conduite d'alimentation et, d'autre part, par au moins un passage de rejet débouchant dans le réservoir à un niveau intermédiaire compris entre ledit au moins un passage de prélèvement et le sommet du réservoir, dans lequel la partie de conduite d'alimentation possède un tronçon de rétrécissement au niveau duquel la section de passage de la partie de conduite d'alimentation est inférieure à la section de passage du tronçon de prélèvement, et dans lequel ledit au moins un passage de rejet débouche dans la partie de conduite d'alimentation au niveau du tronçon de rétrécissement.

La réduction de la section de passage au niveau du tronçon de rétrécissement entraîne, par effet Venturi, une augmentation de la vitesse du propergol au passage du tronçon de rétrécissement et donc la formation d'une zone de dépression au niveau des orifices de rejet par lesquels le passage de rejet débouche dans la partie de conduite.

Une telle dépression permet alors de drainer efficacement l'excès de gaz à l'interface liquide-gaz du réservoir de l'accumulateur hydraulique, même en conditions de micro-gravité ou à bas régime lorsque le débit de propergol est faible en amont du tronçon de rétrécissement.

Une telle configuration permet en outre de se passer de tube de rejet faisant saillie dans le partie de conduite: elle perturbe donc moins l'écoulement de propergol, évitant notamment un phénomène de sillage, et permet une réalisation aisée par fabrication additive. En particulier, une telle configuration, très compacte, est tout à fait adaptée aux parties de conduite coudées. En outre, l'absence de tube de rejet permet de renforcer la robustesse mécanique de l'ensemble, la présence d'un tube dans l'écoulement pouvant entraîner des phénomènes de résonance non souhaités lorsque ses fréquences propres sont mal accordées.

Dans certains modes de réalisation, la partie de conduite est configurée pour être reliée en amont à une alimentation en propergol liquide, de l'oxygène liquide par exemple, et reliée en aval à une chambre de combustion.

Dans certains modes de réalisation, le tronçon de prélèvement est situé en aval du tronçon de rétrécissement.

Dans certains modes de réalisation, d'amont en aval, la section de passage de la partie de conduite d'alimentation diminue, atteint un minimum au niveau du tronçon de rétrécissement, et augmente à nouveau avant d'atteindre le tronçon de prélèvement. D'une part, ceci permet de respecter un diamètre nominal aux extrémités amont et aval de la partie de conduite afin de faciliter son intégration dans le reste du système d'alimentation, grâce à l'utilisation de brides annulaires conventionnelles par exemple. D'autre part, ceci permet d'obtenir une augmentation de la vitesse et une dépression localisée uniquement aux alentours du tronçon de rétrécissement, sans affecter la vitesse et la pression du propergol en amont et en aval de la partie de conduite.

Dans certains modes de réalisation, la section de passage au niveau du tronçon de rétrécissement est inférieure d'au moins 1%, de préférence au moins 20%, à la section de passage du tronçon de prélèvement. Une telle réduction de section de passage permet d'obtenir une dépression suffisamment importante pour assurer un drain convenable dans le passage de rejet.

Dans certains modes de réalisation, l'évolution de la section de passage de la partie de conduite d'alimentation est continue, et de préférence dérivable. Une telle régularité de la section de passage, et donc du profil de la paroi interne de la partie de conduite, sans discontinuité ou changement soudain de pente, permet de réduire l'impact du rétrécissement sur l'écoulement et donc de réduire le risque d'apparition de perturbations hydrodynamiques dans l'écoulement de propergol.

Dans certains modes de réalisation, le diamètre de la partie de conduite d'alimentation est réduit au niveau du tronçon de rétrécissement. Ceci est une manière simple de réduire la section de passage.

Dans certains modes de réalisation, le tronçon de rétrécissement possède une section transversale circulaire. Une telle configuration est particulièrement facile à réaliser

Dans certains modes de réalisation, le diamètre de la partie de conduite d'alimentation est constant tout le long de la partie de conduite d'alimentation. Pour mémoire, pour un contour quelconque, le diamètre est la borne supérieure des distances entre deux points quelconques de ce contour. Autrement dit, dans de tels modes de réalisation, la section de passage est réduite tout en conservant le segment de plus grande distance inchangé : ceci permet de laisser l'écoulement inchangé, ou pratiquement inchangé, dans certains tubes de courant. Par exemple, dans le cas d'une partie de conduite coudée, il est possible de réduire les pertes de charges en réalisant la majorité de la restriction en dehors du plan du coude.

Dans certains modes de réalisation, le tronçon de rétrécissement possède une section transversale elliptique. Une telle section elliptique permet d'une part de limiter le rétrécissement, et donc la perturbation de l'écoulement, à proximité du grand axe de l'ellipse et, d'autre part, de libérer un volume plus important à l'extérieur de la partie de conduite au niveau des extrémités du petit axe afin, par exemple, de permettre la mise en place d'équipements et notamment du passage de rejet.

Dans certains modes de réalisation, le grand axe de cette section elliptique est de longueur constante.

Dans certains modes de réalisation, la partie de conduite d'alimentation est coudée. Comme cela a été expliqué plus haut, le système correcteur d'effet POGO du présent exposé est particulièrement adapté aux configurations coudées.

Dans certains modes de réalisation, la largeur de la partie de conduite d'alimentation est constante dans le plan du coude. Ceci permet de réduire le risque de décollement de l'écoulement au niveau de l'intérieur du coude et donc de réduire les pertes de charges potentielles.

Dans certains modes de réalisation, le réservoir de l'accumulateur hydraulique entoure au moins partiellement la partie de conduite d'alimentation.

Dans certains modes de réalisation, le réservoir de l'accumulateur hydraulique entoure complètement, de préférence de manière axisymétrique, la partie de conduite d'alimentation. Une telle configuration est particulièrement adaptée aux configurations axisymétriques.

Dans certains modes de réalisation, le réservoir de l'accumulateur hydraulique s'étend à l'extérieur du coude formé par la partie de conduite d'alimentation, de préférence de manière symétrique par rapport au plan du coude. Il peut notamment s'étendre sur environ 180°. Cette configuration permet de tirer parti au mieux des contraintes d'encombrement imposée par cette configuration coudée.

Dans certains modes de réalisation, le passage de rejet débouche dans la partie de conduite d'alimentation par au moins deux orifices de rejets séparés d'au moins 30°. Certaines géométries de parties de conduite, notamment lorsqu'elles sont coudées, peuvent entraîner des instabilités dans l'écoulement et donc des irrégularités locales de vitesse et de pression : une telle configuration permet alors de se prémunir du risque d'un affaiblissement localisé de la dépression au niveau d'un orifice de rejet particulier.

Dans certains modes de réalisation, le passage de rejet débouche dans la partie de conduite d'alimentation par au moins deux orifices de rejets diamétralement opposés. Une telle configuration est particulièrement robuste vis-à-vis des fluctuations de pression dans la partie de conduite.

Dans certains modes de réalisation, le passage de rejet débouche dans la partie de conduite d'alimentation par au moins un orifice de rejet situé sur le petit axe de l'ellipse formée par la section transversale du tronçon de rétrécissement. Comme cela a été mentionné plus haut, cette configuration est particulièrement compacte et permet ainsi de ne pas altérer l'enveloppe d'encombrement générale de la partie de conduite, et donc de ne pas gêner le passage d'autres équipements tels les boulons de fixation des brides amont et aval de la partie de conduite. Ainsi, de préférence, aucun orifice de rejet n'est prévu à l'extérieur d'une zone angulaire de 40° centrée sur le petit axe de l'ellipse.

Dans certains modes de réalisation, le passage de rejet débouche dans la partie de conduite d'alimentation par une pluralité d'orifices de rejets répartis tout autour de la partie de conduite d'alimentation. Ceci permet de se prémunir au maximum des variations de pression dans la partie de conduite.

Dans certains modes de réalisation, le passage de rejet comprend un distributeur annulaire entourant le tronçon de rétrécissement de la partie de conduite d'alimentation. Un tel distributeur est particulièrement utile lorsque le réservoir de l'accumulateur hydraulique est prévu seulement sur un côté de la partie de conduite.

Dans certains modes de réalisation, le passage de rejet débouche dans le réservoir par au moins deux orifices distincts. Ceci permet de limiter la sensibilité du système aux accélérations latérales susceptibles de modifier la forme de l'interface liquide/gaz dans le réservoir de l'accumulateur hydraulique.

Dans certains modes de réalisation, le passage de rejet débouche dans le réservoir par une pluralité d'orifices répartis tout le long d'un côté du réservoir, par exemple son côté annulaire interne. Ceci permet de se prémunir au maximum des modifications de forme de l'interface liquide/gaz dues aux accélérations latérales.

Dans certains modes de réalisation, le passage de rejet comprend un conduit de rejet longeant ou plongeant dans le réservoir de l'accumulateur hydraulique.

Dans certains modes de réalisation, le passage de rejet est constitué d'un ou plusieurs orifices pratiqués dans la paroi de la partie de conduite d'alimentation. Le passage de rejet se réduit donc exclusivement à de simples orifices pratiqués dans la paroi séparant la partie de conduite et le réservoir de l'accumulateur hydraulique. Une telle configuration, particulièrement adaptée aux configurations axisymétriques, est très simple et compacte.

Dans certains modes de réalisation, l'alimentation en gaz fournit un gaz inerte tel de l'hélium.

Dans certains modes de réalisation, l'accumulateur hydraulique est dépourvu d'élément se projetant dans la partie de conduite d'alimentation.

Dans certains modes de réalisation, le système correcteur d'effet POGO forme une pièce monobloc, réalisée de préférence par fabrication additive. Elle peut par exemple être réalisée en alliage base nickel ou en alliage base aluminium.

Le présent exposé concerne également un moteur-fusée, comprenant un système correcteur d'effet POGO selon l'un quelconque des modes de réalisation précédents.

Le présent exposé concerne également un véhicule comprenant au moins un moteur-fusée selon l'exposé.

Dans le présent exposé, les termes « longitudinal », « transversal », « axial », « radial », « tangentiel », « intérieur », « extérieur » et leurs dérivés sont définis par rapport à la direction curviligne de la partie de conduite ; on entend par « plan axial » un plan passant par la direction curviligne de la partie de conduite et par « plan radial » un plan perpendiculaire à cette direction curviligne ; les termes « inférieur », « supérieur » et leurs dérivés sont définis par rapport à la direction locale de la gravité, naturelle ou artificielle ; enfin, les termes « amont » et « aval » sont définis par rapport à la circulation du propergol dans la partie de conduite.

Les caractéristiques et avantages précités, ainsi que d'autres, apparaîtront à la lecture de la description détaillée qui suit, d'exemples de réalisation du dispositif et du procédé proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est une représentation schématique d'un véhicule spatial comprenant un système correcteur d'effet POGO selon l'exposé.
La FIG 2 est une représentation schématique en coupe d'un premier exemple de système correcteur d'effet POGO.
La FIG 3 est une vue en coupe axiale d'un deuxième exemple de système correcteur d'effet POGO.
La FIG 4 est une vue en coupe du deuxième exemple de système correcteur d'effet POGO selon le plan IV de la FIG 3.
La FIG 5 est une vue en coupe rabattue selon le plan V de la FIG 3 du deuxième exemple de système correcteur d'effet POGO.
La FIG 6 est une vue en coupe axiale d'un troisième exemple de système correcteur d'effet POGO.

### DESCRIPTION DETAILLEE D'EXEMPLE(S) DE REALISATION

Afin de rendre plus concrète l'invention, des exemples de systèmes correcteurs d'effet POGO sont décrits en détail ci-après, en référence aux dessins annexés. Il est rappelé que l'invention ne se limite pas à ces exemples.

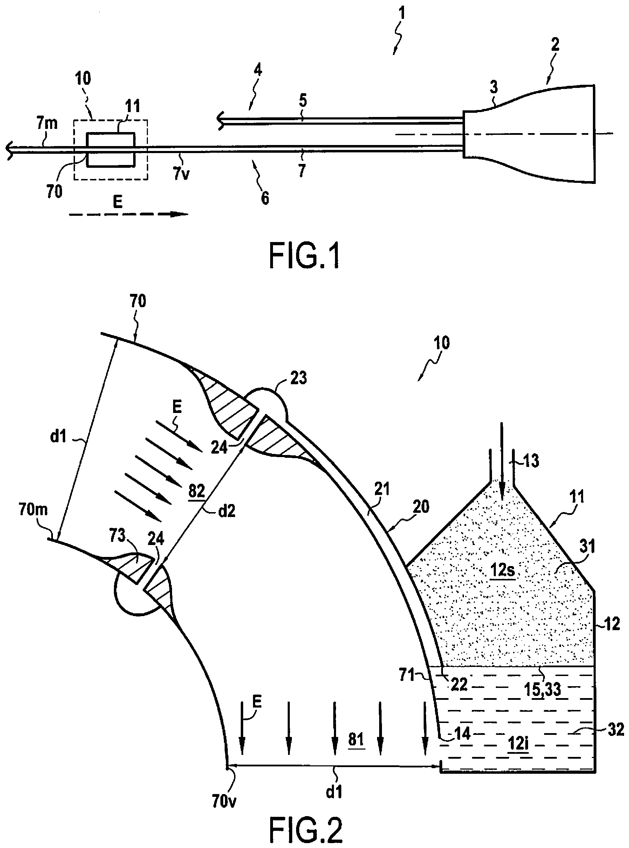

La FIG 1 représente très schématiquement un véhicule spatial 1, tel qu'un étage de lanceur spatial. Le véhicule 1 comprend un moteur-fusée à propergol liquide 2. Le moteur-fusée 2 comprend une chambre de propulsion 3 intégrant une chambre de combustion et une tuyère convergente-divergente, comme cela est connu.

La chambre de propulsion 3 est alimentée en deux propergols liquides par deux systèmes d'alimentation 4 et 6, comprenant chacun une conduite d'alimentation en propergol 5 et 7. Le premier système d'alimentation 4 n'est représenté que partiellement.

Le deuxième système d'alimentation 6 est pourvu d'un système correcteur POGO capacitif 10, désigné ci-après par « SCP » par commodité.

Dans toute la suite du présent exposé, les termes « amont » et « aval » s'entendront par rapport au SCP 10, en suivant le sens de circulation du propergol liquide vers le moteur-fusée 2.

Le SCP 10 comprend un accumulateur hydraulique 11 et une partie de conduite d'alimentation 70. La partie de conduite d'alimentation 70 est configurée pour être reliée en amont à une partie amont 7m de la conduite d'alimentation 7, et en aval à une partie aval 7v de la conduite d'alimentation 7. La direction E d'écoulement du propergol liquide est indiquée par une flèche sur les figures. La partie amont 7m et la partie aval 7v ont, par exemple, une section circulaire.

La FIG 2 illustre de manière schématique un premier exemple d'un tel SCP 10. Dans cet exemple, la partie de conduite 70 est coudée. Elle possède sur tout son long une section circulaire mais son diamètre est évolutif entre son extrémité amont 70m et son extrémité aval 70v. Plus précisément, ses extrémités amont 70m et aval 70v possèdent le même diamètre d1 correspondant au diamètre nominal de la partie de conduite 70 ; en revanche, la partie de conduite 70 possède un tronçon intermédiaire de rétrécissement 82 au niveau duquel la paroi 71 de la partie de conduite 70 se resserre, formant un goulot d'étranglement 73, pour réduire le diamètre de la partie de conduite 70. En conséquence, le diamètre d2 du tronçon de rétrécissement 82 est inférieur au diamètre nominal d1 de la partie de conduite 70 de telle sorte que la section de passage de la partie de conduite 70 est réduite au niveau du tronçon de rétrécissement 82.

Il convient toutefois de noter que la paroi 71 de la partie de conduite 70 garde un profil continu, et sans rupture de pente, même au niveau du tronçon de rétrécissement 82.

Par ailleurs, l'accumulateur hydraulique 11 comprend un réservoir 12 et un injecteur de gaz 13 prévu dans une partie supérieure 12s du réservoir 12, de préférence au sommet du réservoir 12. La partie inférieure 12i du réservoir 12 est reliée pour sa part à la partie de conduite d'alimentation 70 par au moins un passage de prélèvement 14 prenant ici la forme d'orifices de prélèvement pratiqués dans la paroi 71 de la partie de conduite d'alimentation 70, au niveau d'un tronçon de prélèvement 81 situé en aval du tronçon de rétrécissement 82 et dont le diamètre est égal au diamètre nominal d1 de la partie de conduite 70. Ainsi, grâce à ce passage de prélèvement 14, du propergol issu de la partie de conduite 70 peut pénétrer dans la partie inférieure 12i du réservoir 12.

Dans le présent exposé, la partie « supérieure » 12s du réservoir 12 désigne la partie du réservoir 12 où le gaz injecté par l'injecteur 13 tend à s'accumuler en raison de sa densité plus faible que celle du propergol liquide circulant dans la conduite 7, et en raison de l'accélération subie par le SCP 10 lorsque le moteur-fusée 2 fonctionne. À l'inverse, la partie « inférieure » 12i du réservoir 12 désigne la partie du réservoir 12 où le liquide tend à s'accumuler en raison de sa densité plus importante, et en raison de l'accélération subie par le SCP 10 lorsque le moteur-fusée 2 fonctionne.

L'accumulateur hydraulique 11 comprend également un passage de rejet 20 débouchant d'une part dans le réservoir 12 à un niveau intermédiaire 15 séparant les parties supérieure 12s et inférieure 12i du réservoir 12, et, d'autre part, dans la partie de conduite d'alimentation 70 au niveau du tronçon de rétrécissement 82.

Plus précisément, le passage de rejet 20 prend ici la forme d'un conduit 21 longeant extérieurement la paroi 71 de la partie de conduite 70 et s'étendant entre une bouche 22 ouverte au niveau intermédiaire 15 du réservoir 12 et un distributeur 23 entourant le tronçon de rétrécissement 82 de la partie de conduite 70, des orifices de rejet 24 étant pratiqués dans la paroi 71 de la partie de conduite 70 entre le tronçon de rétrécissement 82 et le distributeur 23, à intervalle régulier tout autour du tronçon de rétrécissement 82, au niveau où le diamètre de la partie de conduite 70 est minimal.

Dans un exemple typique, le propergol liquide circulant dans la conduite d'alimentation 7 et la partie de conduite d'alimentation 70 est de l'oxygène liquide (LOx), et le gaz injecté par l'injecteur 13 est de l'hélium (He).

Pendant que le moteur-fusée 2 fonctionne, l'injecteur 13 injecte un débit constant de gaz dans le réservoir 12, ce qui crée un volume de gaz 31 s'accumulant dans la partie supérieure 12s du réservoir 12, formant alors une interface 33 entre le gaz et le propergol liquide 32 présent dans la partie inférieure 12i du réservoir 12.

Par ailleurs, la diminution de la section de passage de la partie de conduite 70 au niveau du tronçon de rétrécissement 82 entraîne, par effet Venturi, une accélération du propergol liquide et une diminution locale de pression. En conséquence, la pression régnant au niveau des orifices de rejet 24 est inférieure à la pression régnant dans le réservoir 12 au niveau de la bouche 22 du passage de rejet 20 : une aspiration est dès lors générée dans le passage de rejet 20 de telle sorte que l'excès de gaz dépassant le niveau intermédiaire 15 du réservoir 12 est aspiré et rejeté dans la partie de conduite 70.

Le volume de gaz 31 peut ainsi être maintenu sensiblement constant dans le réservoir 12. Dès lors, on peut éviter l'apparition d'oscillations POGO, comme cela est connu, en modifiant les fréquences propres de la conduite d'alimentation 70.

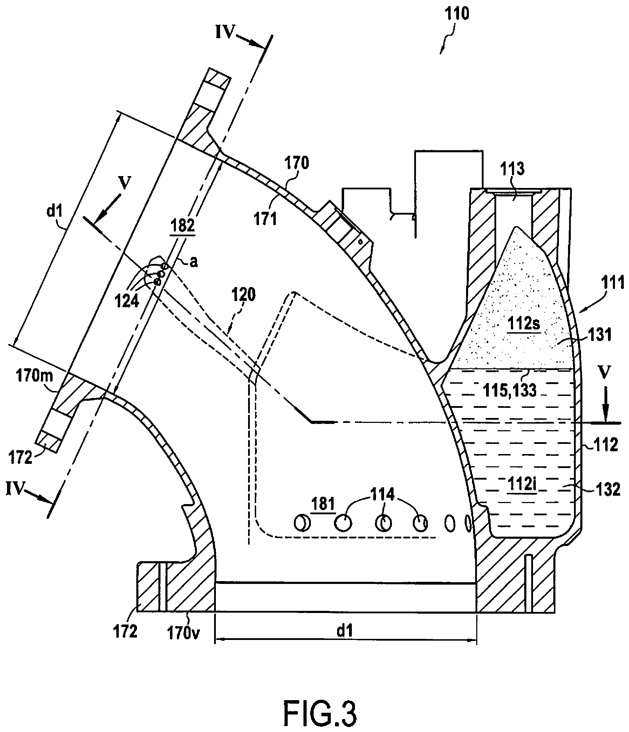

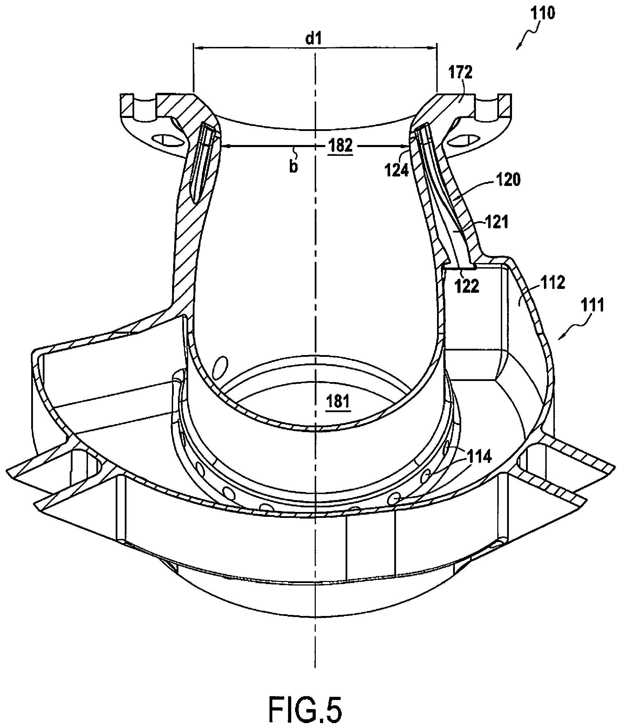

Les FIG 3, 4 et 5 illustrent un deuxième exemple de réalisation de SCP 110. Ce deuxième exemple est analogue au premier exemple en de nombreux points et seules les spécificités de ce deuxième exemple seront donc décrites en détail. Dans cet exemple, le SCP 110 est réalisé de manière monobloc par fabrication additive. Il comprend une partie de conduite 170, coudée, et un accumulateur hydraulique 111 s'étendant sur sensiblement 180° autour de la partie de conduite 170, du côté extérieur du coude.

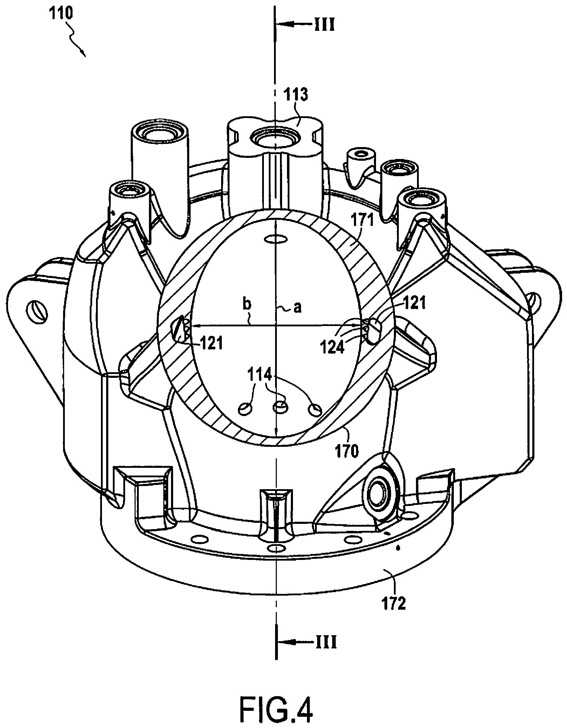

Dans ce deuxième exemple, comme cela est mieux visible sur la FIG. 4, la section de rétrécissement 182 n'est pas formée par une réduction du diamètre de la partie de conduite 170 mais par une ovalisation de la paroi 171 de cette dernière. Plus précisément, comme dans le premier exemple, les extrémités amont 170m et aval 170v, munies chacun d'une bride de fixation 172, possèdent une section circulaire dont le diamètre d1 correspond au diamètre nominal de la partie de conduite 170 ; en revanche, au niveau du tronçon de rétrécissement 182, la partie de conduite 170 possède une section transversale elliptique. Le grand axe a de cet ellipse est aligné sur le plan du coude et conserve une longueur constante égale au diamètre nominal d1; le petit axe b diminue en revanche continûment, sans rupture de pente, avant d'atteindre un minimum et de réaugmenter jusqu'à obtenir à nouveau le diamètre nominal d1 et donc une section transversale circulaire.

Le réservoir 112, en forme de C, est alors prévu autour de la partie de conduite 170 sur environ 180°. La partie supérieure 112s du réservoir 112 est munie d'un injecteur de gaz 113. La partie inférieure 112i du réservoir 112 est reliée pour sa part à la partie de conduite d'alimentation 170 par une pluralité d'orifices de prélèvement 114 pratiqués dans la paroi 171 de la partie de conduite d'alimentation 170, au niveau d'un tronçon de prélèvement 181 situé en aval du tronçon de rétrécissement 182 et dont le diamètre est égal au diamètre nominal d1 de la partie de conduite 170.

L'accumulateur hydraulique 111 comprend ici deux passages de rejet 120, diamétralement opposés, débouchant d'une part dans le réservoir 112 à un niveau intermédiaire 115 séparant les parties supérieure 112s et inférieure 112i du réservoir 112, et, d'autre part, dans la partie de conduite d'alimentation 170 au niveau du tronçon de rétrécissement 182.

Plus précisément, chaque passage de rejet 120 prend ici la forme d'un conduit 121 pratiqué dans la paroi 171 de la partie de conduite 170 et s'étendant entre une bouche 122 ouverte au niveau intermédiaire 115 du réservoir 112 et un groupe de plusieurs orifices de rejet 124, ici trois orifices alignés, s'ouvrant dans le tronçon de rétrécissement 182 au niveau où le petit axe b de l'ellipse est minimum.

Le fonctionnement de ce deuxième exemple de SCP 110 est analogue à celui du premier exemple.

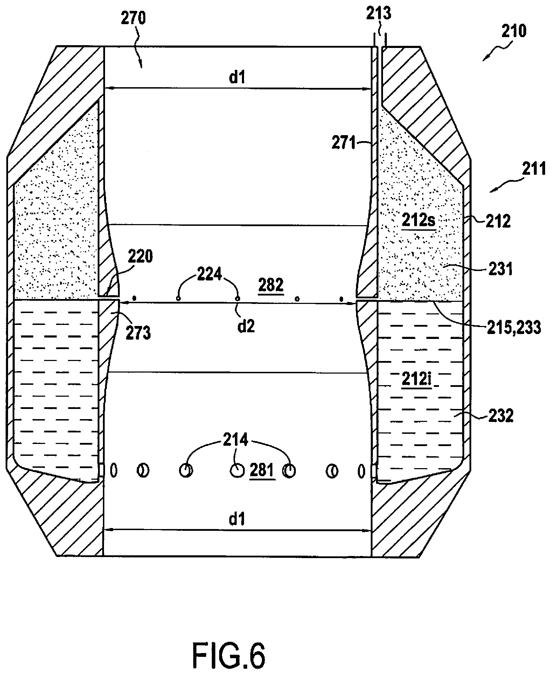

La FIG 6 illustre un troisième exemple de réalisation de SCP 210. Ce troisième exemple est analogue au premier exemple en de nombreux points et seules les spécificités de ce troisième exemple seront donc décrites en détail. Dans cet exemple, la partie de conduite 270 du SCP 210 est axisymétrique et l'accumulateur hydraulique 211 entoure complètement, sur 360°, la partie de conduite 270, le réservoir 212 n'étant séparé de la partie de conduite 270 que par la paroi 271.

Dans cet exemple, de manière analogue au premier exemple, la diminution de la section de passage au niveau du tronçon de rétrécissement 282 est obtenue par un resserrement de la paroi 271 formant un goulot d'étranglement 273 dont le diamètre minimal d2 est inférieur au diamètre nominal d1 de la partie de conduite 270.

Une spécificité de ce troisième exemple est que le passage de rejet 220 se limite à de simples orifices de rejet 224, régulièrement répartis tout autour du tronçon de rétrécissement 282, traversant complètement la paroi 271 pour déboucher dans le réservoir 212 au niveau intermédiaire 215.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. La description et les dessins doivent être considérés dans un sens illustratif plutôt que restrictif.

## Revendications

1. Système correcteur d'effet POGO pour un système d'alimentation en propergol liquide d'un moteur-fusée, comprenant
une partie de conduite d'alimentation (70) en propergol liquide,
un accumulateur hydraulique (11), comprenant un réservoir (12) équipé d'une alimentation en gaz (13) et relié, d'une part, à la partie de conduite d'alimentation (70) par au moins un passage de prélèvement (14) débouchant au niveau d'un tronçon de prélèvement (81) de la partie de conduite d'alimentation (70) et, d'autre part, par au moins un passage de rejet (20) débouchant dans le réservoir (12) à un niveau intermédiaire (15) compris entre ledit au moins un passage de prélèvement (14) et le sommet du réservoir (12),
dans lequel la partie de conduite d'alimentation (70) possède un tronçon de rétrécissement (82) au niveau duquel la section de passage de la partie de conduite d'alimentation (70) est inférieure à la section de passage du tronçon de prélèvement (81), et
dans lequel ledit au moins un passage de rejet (20) débouche dans la partie de conduite d'alimentation (70) au niveau du tronçon de rétrécissement (82).

2. Système correcteur d'effet POGO selon la revendication 1, dans lequel la section de passage au niveau du tronçon de rétrécissement (82) est inférieure d'au moins 1%, de préférence au moins 20%, à la section de passage du tronçon de prélèvement (81).

3. Système correcteur d'effet POGO selon la revendication 1 ou 2, dans lequel l'évolution de la section de passage de la partie de conduite d'alimentation (70) est continue, et de préférence dérivable.

4. Système correcteur d'effet POGO selon l'une quelconque des revendications 1 à 3, dans lequel le diamètre de la partie de conduite d'alimentation (70) est réduit au niveau du tronçon de rétrécissement (82).

5. Système correcteur d'effet POGO selon l'une quelconque des revendications 1 à 3, dans lequel le tronçon de rétrécissement (182) possède une section transversale elliptique dont le grand axe (a) est de longueur constante.

6. Système correcteur d'effet POGO selon l'une quelconque des revendications 1 à 5, dans lequel la partie de conduite d'alimentation (70) est coudée.

7. Système correcteur d'effet POGO selon la revendication 6, dans lequel la largeur de la partie de conduite d'alimentation (70) est constante dans le plan du coude.

8. Système correcteur d'effet POGO selon l'une quelconque des revendications 1 à 7, dans lequel le passage de rejet (20) débouche dans la partie de conduite d'alimentation (70) par au moins deux orifices de rejets (24) diamétralement opposés.

9. Système correcteur d'effet POGO selon l'une quelconque des revendications 1 à 8, dans lequel le tronçon de rétrécissement (182) possède une section transversale elliptique et dans lequel le passage de rejet (120) débouche dans la partie de conduite d'alimentation (170) par au moins un orifice de rejet (124) situé sur le petit axe (b) de l'ellipse formée par la section transversale du tronçon de rétrécissement (182).

10. Système correcteur d'effet POGO selon l'une quelconque des revendications 1 à 9, dans lequel le passage de rejet (20) débouche dans la partie de conduite d'alimentation (70) par une pluralité d'orifices de rejets (24) répartis tout autour de la partie de conduite d'alimentation (70).

11. Système correcteur d'effet POGO selon l'une quelconque des revendications 1 à 10, dans lequel le passage de rejet (220) est constitué d'un ou plusieurs orifices (224) pratiqués dans la paroi (271) de la partie de conduite d'alimentation (270).

12. Moteur-fusée, comprenant un système correcteur d'effet POGO (10) selon l'une quelconque des revendications précédentes.

## Patentansprüche

1. POGO-Effekt-Korrektursystem für ein System zur Versorgung eines Raketentriebwerks mit Flüssigtreibstoff, umfassend:
einen Teil einer Leitung (70) zur Versorgung mit Flüssigtreibstoff,
einen hydraulischen Speicher (11), umfassend einen Behälter (12), der mit einer Gasversorgung (13) ausgestattet ist und verbunden ist einerseits mit dem Teil der Versorgungsleitung (70) durch mindestens einen Entnahmedurchgang (14), der auf der Höhe eines Entnahmeabschnitts (81) des Teils der Versorgungsleitung (70) einmündet, und andererseits durch mindestens einen Ausstoßdurchgang (20), der in den Behälter (12) auf einer Zwischenhöhe (15) einmündet, die zwischen dem genannten mindestens einen Entnahmedurchgang (14) und der Oberseite des Behälters (12) liegt,
wobei der Teil der Versorgungsleitung (70) einen Verengungsabschnitt (82) aufweist, auf dessen Höhe der Querschnitt des Durchgangs des Teils der Versorgungsleitung (70) kleiner ist als der Querschnitt des Durchgangs des Entnahmeabschnitts (81), und
wobei der genannte mindestens eine Ausstoßabschnitt (20) in den Teil der Versorgungsleitung (70) auf der Höhe des Verengungsabschnitts (82) einmündet.

2. POGO-Effekt-Korrektursystem gemäß Anspruch 1, wobei der Querschnitt des Durchgangs auf der Höhe des Verengungsabschnitts (82) um mindestens 1 %, vorzugsweise mindestens 20 %, kleiner ist als der Querschnitt des Durchgangs des Entnahmeabschnitts (81).

3. POGO-Effekt-Korrektursystem gemäß Anspruch 1 oder 2, wobei der Verlauf des Querschnitts des Durchgangs der Versorgungsleitung (70) kontinuierlich und vorzugsweise ableitbar ist.

4. POGO-Effekt-Korrektursystem gemäß einem der Ansprüche 1 bis 3, wobei der Durchmesser des Teils der Versorgungsleitung (70) auf der Höhe des Verengungsabschnitts (82) reduziert ist.

5. POGO-Effekt-Korrektursystem gemäß einem der Ansprüche 1 bis 3, wobei der Verengungsabschnitt (182) einen elliptischen Querschnitt aufweist, dessen große Achse (a) eine konstante Länge hat.

6. POGO-Effekt-Korrektursystem gemäß einem der Ansprüche 1 bis 5, wobei der Teil der Versorgungsleitung (70) gebogen ist.

7. POGO-Effekt-Korrektursystem gemäß Anspruch 6, wobei die Länge des Teils der Versorgungsleitung (70) in der Ebene der Biegung konstant ist.

8. POGO-Effekt-Korrektursystem gemäß einem der Ansprüche 1 bis 7, wobei der Ausstoßdurchgang (20) in den Teil der Versorgungsleitung (70) durch mindestens zwei diametral gegenüberliegende Ausstoßöffnungen (24) einmündet.

9. POGO-Effekt-Korrektursystem gemäß einem der Ansprüche 1 bis 8, wobei der Verengungsabschnitt (182) einen elliptischen Querschnitt aufweist, und wobei der Ausstoßdurchgang (120) in den Teil der Versorgungsleitung (170) durch mindestens eine Ausstoßöffnung (124) einmündet, welche auf der kleinen Achse (b) der Ellipse angeordnet ist, die von dem Querschnitt des Verengungsabschnitts (182) gebildet wird.

10. POGO-Effekt-Korrektursystem gemäß einem der Ansprüche 1 bis 9, wobei der Ausstoßdurchgang (20) in den Teil der Versorgungsleitung (70) durch eine Vielzahl von Ausstoßöffnungen (24) einmündet, die um den gesamten Teil der Versorgungsleitung (70) verteilt sind.

11. POGO-Effekt-Korrektursystem gemäß einem der Ansprüche 1 bis 10, wobei der Ausstoßdurchgang (220) aus einer oder mehreren Öffnungen (224) besteht, die in der Wand (271) des Teils der Versorgungsleitung (270) ausgeführt sind.

12. Raketentriebwerk, umfassend ein POGO-Effekt-Korrektursystem (10) gemäß einem der vorhergehenden Ansprüche.

## Claims

1. A pogo effect corrector system for a liquid propellant feed system of a rocket engine, the corrector system comprising:
a liquid propellant feed pipe portion (70);
a hydraulic accumulator (11) comprising a tank (12) provided with a gas feed (13) and connected firstly to the feed pipe portion (70) via at least one take-off passage (14) opening out into a take-off segment (81) of the feed pipe portion (70), and secondly via at least one rejection passage (20) opening out into the tank (12) at an intermediate level (15) lying between said at least one take-off passage (14) and the top of the tank (12);
wherein the feed pipe portion (70) possesses a constriction segment (82) where the flow section of the feed pipe portion (70) is less than the flow section of the take-off segment (81); and
wherein said at least one rejection passage (20) opens out into the feed pipe portion (70) at the constriction segment (82).

2. A pogo effect corrector system according to claim 1, wherein the flow section at the constriction segment (82) is at least 1% and preferably at least 20% less than the flow section of the take-off segment (81).

3. A pogo effect corrector system according to claim 1 or claim 2, wherein the flow section of the feed pipe portion (70) varies continuously, preferably in differentiable manner.

4. A pogo effect corrector system according to any one of claims 1 to 3, wherein the diameter of the feed pipe portion (70) is reduced at the constriction segment (82).

5. A pogo effect corrector system according to any one of claims 1 to 3, wherein the constriction segment (182) possesses a cross-section that is elliptical of major axis (a) that is of constant length.

6. A pogo effect corrector system according to any one of claims 1 to 5, wherein the feed pipe portion (70) presents a bend.

7. A pogo effect corrector system according to claim 6, wherein the width of the feed pipe portion (70) is constant in the plane of the bend.

8. A pogo effect corrector system according to any one of claims 1 to 7, wherein the rejection passage (20) opens out into the feed pipe portion (70) via at least two diametrically opposite rejection orifices (24).

9. A pogo effect corrector system according to any one of claims 1 to 8, wherein the constriction segment (182) possesses a cross-section that is elliptical and wherein the rejection passage (120) opens out into the feed pipe portion (170) via at least one rejection orifice (124) situated on the minor axis (b) of the ellipse formed by the cross-section of the constriction segment (182).

10. A pogo effect corrector system according to any one of claims 1 to 9, wherein the rejection passage (20) opens out into the feed pipe portion (70) via a plurality of rejection orifices (24) distributed all around the feed pipe portion (70).

11. A pogo effect corrector system according to any one of claims 1 to 10, wherein the rejection passage (220) is constituted by one or more orifices (224) formed through the wall (271) of the feed pipe portion (270).

12. A rocket engine, including a pogo effect corrector system (10) according to any preceding claim.
